# EUROPEAN PATENT SPECIFICATION

(11) **EP 3 595 987 B1**
(45) Date of publication and mention of the grant of the patent: **14.04.2021**
(21) Application number: 18710071.4
(22) Date of filing: 16.03.2018
(51) Int. Cl.: B65D 85/804

(54) **CAPSULE FOR PREPARING A BEVERAGE PRODUCT**
KAPSEL ZUR HERSTELLUNG EINES GETRÄNKEPRODUKTS
CAPSULE POUR PRÉPARER UNE BOISSON

(30) Priority: 17.03.2017 EP 17161647
(43) Date of publication of application: 22.01.2020
(73) Proprietor: PRODUCTOS SOLUBLES S.A., 34200 Venta de Baños, Palencia (ES)
(72) Inventor: CALSINA GOMIS, Joaquin, 08072 Sant Cugat (Barcelona) (ES)
(74) Representative: Curell Suñol S.L.P.
(86) International application number: PCT/EP2018/056680
(87) International publication number: WO 2018/167277

(56) References cited:
- WO-A1-2013/132450
- WO-A1-2014/102701
- WO-A1-2017/009771
- GB-A- 1 256 247

## Description

### Field of the invention

The invention relates to a capsule for preparing a beverage product from the interaction between a primary product and a fluid comprising a closed inner chamber having an extraction area, and an inner duct extending longitudinally from said extraction area towards an opposite area to said extraction area and defining a main axis, said inner duct comprising an inner opening and an outer opening.

### State of the Art

Beverages such as coffee, tea, juices or soups are known to be prepared from a primary product contained in a capsule, which can be either a single-dose capsule or for several doses. The primary product must be mixed with either a hot or cold fluid for solubilization, or else the fluid must be impregnated with the primary product to prepare an infusion.

Document EP 1472156 A2 discloses a capsule of the type described in the preceding paragraph. The capsule is designed to cause infusion by injecting hot water under pressure into it by means of an extraction device. The capsule has a closed chamber containing the primary infusion product and a wall consisting of a thin sheet that opens for the beverage to flow out. The opening of the thin sheet wall of the capsule is caused by raising the hydrostatic pressure of the fluid in the inner chamber. A problem with this capsule consists of when the injection of hot water ends, the capsule is full of remainder water. Therefore, there is a risk of the remainder water contained in the inner chamber coming out when the capsule is removed from the machine. As a result, the beverage is water down and/or the user and the machine may get stained.

Document GB 1256247 A discloses a capsule alternative for containing substances intended for preparing beverages. The capsule is made from a material that can be punctured at least partially, and contains a primary product intended for producing a beverage by means of introducing a liquid under pressure. The capsule can be used in automatic beverage preparation and dispensing machines and allows introducing the liquid in the capsule through an injecting member. The beverage is discharged through an opening made in the capsule extraction area. To that end, a hollow tube-like tubular puncturing element contained inside the capsule is actuated from the outside. In one embodiment of this capsule, the puncturing element is guided into an inner duct. Furthermore, the puncturing element has one or more liquid outlet holes through which the beverage can exit through the inner duct of the puncturing element. This capsule has the problem that the puncturing element punctures mechanically, by direct compression on the extraction area, to open the discharge opening. Therefore, this element can pull off part of this wall of the capsule, such that pieces of same can fall into the beverage receiving container. Another problem consists of the puncturing element being able to slide along the inner duct during preparation of the beverage until partially projecting from the body of the capsule. In this situation, the beverage outlet hole or holes provided in the puncturing element would be clogged. In this situation, the beverage cannot correctly exit through the inner duct. In the best-case scenario, the beverage may leak into the annular gap existing between the inner duct and the puncturing element. Nevertheless, in this situation the beverage exits at a high speed and it has a risk of creating a notable splash when it falls into the mug or cup intended for collecting the beverage product.

Document WO 2013132450 A1 discloses a capsule comprising a deformable and/or compressible casing that is provided with a base wall and with a side wall that define a cavity containing an initial product to be joined to a fluid to obtain a final product and a nozzle provided with a plurality of openings for the passage of the fluid The nozzle is engaged with an outflow portion of the base wall and arranged for exiting from the cavity through said outflow portion when the casing is compressed and/or crushed. The nozzle comprises a first portion arranged for abutting on, and sliding with interference inside the outflow portion in a sealed manner such that said final product exits at least initially from the cavity only through at least one further opening of the nozzle.

Document WO 2014102701 A1 discloses a capsule, comprising: a deformable and/or crushable casing provided with a base wall and a side wall defining a cavity suitable for containing an initial product to be joined to a fluid for making a final product; a nozzle associated with the casing and comprising a longitudinal side wall and a first end provided with a first opening suitable to engage injecting means of the fluid of a brewing machine The longitudinal side wall is provided with at least one outflow opening connected to the first opening through a first duct for introducing the fluid in the cavity in an injecting step. The nozzle comprises at least one delivering opening made along the longitudinal side wall and a second end that is opposite to the first end. The second end comes out from the cavity through an exit opening of the base wall and is provided with a second opening connected to the delivering opening through a second duct for enabling the final product to exit from the cavity and be delivered directly into a fruition container in a delivering step.

### Summary of the invention

The purpose of the invention is to provide a capsule for preparing a beverage product from the interaction between a primary product and a fluid of the type indicated above, which does not show losses of fluid when preparation of the beverage ends, and which simultaneously assures reliable operation, without any risks that parts of the capsule fall into the beverage, or of splashing occurring when the beverage is prepared.

The invention also considers the problem of providing a capsule that prevents contact of the infusion with the machine during beverage preparation, such that different beverages can be prepared in the same machine without the risk of cross-contamination.

This objective is achieved by means of a capsule of the type indicated above, characterized in that the inner opening is arranged at a first distance which, measured on said main axis, from the lowest point delimiting said inner chamber in said extraction area, is equal to or greater than half the maximum distance from said inner chamber, said maximum distance being measured on said main axis from said lowest point delimiting said inner chamber, to said opposite area, and in that said capsule further comprises closing means for closing said inner duct which are arranged separated from said outer opening in the direction of said inner chamber at a second distance that is at least greater than the largest dimension of the cross section of said inner duct, and opening means arranged for opening up a passage of fluid communication with the outside of said capsule in said closing means when an external compressive force with respect to the capsule is applied on said opening means. Preferably, in the invention the mechanical opening of the closing means of the duct by compression takes place before introducing the fluid in said inner chamber.

In the invention a beverage product refers to any type of infusion prepared from a hot or cold fluid, and preferably water. Infusion products according to the invention consist of, for example, coffee, tea, mate infusion or other beverages such as hot chocolate, soup or even juices obtained from any product soluble in fluids such as water or the like.

Given its features, the capsule according to the invention has a closed state in which the inner duct is closed by closing means, and an open state. In the open state, the inner chamber can be placed in fluidic communication with the outside of the capsule, as a result of applying external compressive force on the opening means opening up a passage in the closing means before fluid starts to be injected into the capsule or in case that the injection process has started, before the hydrostatic pressure raises within the inner chamber. In other words, the opening of the capsule is not due to the effect of hydrostatic pressure raise.

Since the inner opening, i.e., the opening of the inner duct located inside the inner chamber, is far from the extraction area, the entire length or height of the duct is taken advantage of to prevent the exit of fluid. In other words, if the capsule is placed with the duct in the vertical position when the capsule has been used and is full of water, only that water remaining between the upper part of the capsule and the inner opening will be able to exit through the inner chamber. Once the level of liquid is flush with the inner opening, liquid no longer exits. In a particularly preferred working mode, it is envisaged that the capsule works in a position such that the inner duct is arranged in the vertical position during fluid injection. Nevertheless, this is not an essential feature of invention. The dimension or maximum distances of the inner chamber is understood as the longitudinal distance measured on the main axis of the inner duct, from the point farthest away from the inner chamber in the extraction area, to the farthermost point in the area opposite the extraction area.

In turn, in the invention the concept of external compressive force refers to the capsule being opened mechanically and not due to the increase in hydrostatic pressure produced inside the chamber by the injected fluid. As a result, more reliable working of the capsule is assured since the mechanical opening prior to injection provides more constant pressure conditions during beverage preparation.

As a result of the closing means being located in the inner chamber, another important feature of the invention consists of said means being concealed and far away from the outer contour of the capsule. Accordingly, the risk of the capsule being accidentally opened by an accidental blow is considerably reduced.

The synergy existing between the inner duct and the closing means arranged inside the inner duct located a distance away from the outer opening, which is greater than the largest dimension of the cross-section of said inner duct, should also be pointed out. In the first place, in the event that the closing means become detached, it is more likely that they will be stuck inside the inner duct. This makes it considerable difficult for parts of the capsule to exit through the duct. Therefore, the inner duct is preferably cylindrical.

Another important synergistic effect is provided by the closing means, which act like a barrier producing a pressure drop in the fluid. In the capsule of patent document GB 1256247 A, the fluid encounters a narrowing in the outlet duct, right at the outer opening. Furthermore, this obturation opens like a flap acting as an element that diverts the beverage product. Therefore, the fluid exits in an uncontrolled manner and can produce a great deal of splashing. In contrast, in the invention, the segment of the inner duct going from the closing means to the outer opening where the fluid is discharged allows the outgoing beverage product to lose speed and therefore exit the outer opening of the inner duct more gently. Accordingly, the risk of the beverage product splashing inside the mug or cup receiving said beverage product is reduced.

In a particularly preferred manner, during beverage preparation the capsule is arranged in a position such that the inner duct is oriented vertically. Nevertheless, it is not ruled out that the capsule can work in an inclined or horizontal position, since the actual issue of emptying out the fluid remaining in the capsule occurs primarily when the capsule is removed from the machine. At this time, the fluid injecting punch is removed and an air passage opens up, making it easier the capsule to empty. Therefore, despite the fact that the capsule works in the horizontal position, when it is removed from the machine and placed in a position in which the duct is oriented vertically, the risk of liquid exiting is eliminated.

Furthermore, the invention covers a series of preferred features that are the object of the dependent claims and the usefulness of which will become clearer below in the detailed description of an embodiment of the invention.

In a first preferred embodiment, the closing means are arranged such that said second distance is equal to said first distance. The eventual buildup of grains of primary product inside the inner duct is thereby prevented, and accordingly clogging of this duct is avoided.

Also, for the purpose of maximally reducing the risk of primary product contained in the inner chamber exiting through the inner duct, in a preferred embodiment the inner chamber contains a primary product defining a primary product level, and the primary product level is located below said inner opening. Therefore, during beverage preparation, despite the fact that water is injected into the inner chamber, the primary product being able to exit through the passage in the closing means is hindered. In this context, it must be understood that in capsules of this type, transport thereof tends to mix the product up. Therefore, in order to measure the primary product level herein described, the product must be compressed, forming a plane substantially perpendicular to the one of the axis of the duct, to later determine whether or not this plane is located below the inner opening of the duct.

If maximally reducing the risk of fluid exiting once beverage product preparation ends is desired, in a particularly preferred manner the inner opening is arranged at the end of said inner duct adjacent to said opposite area, said first distance being equal to or greater than 90% of said maximum distance from said inner chamber.

Another issue considered by the invention is for the use of the capsule to by as hygienic as possible. To that end, preferably in the through the extraction area, said inner duct extends out of the inner chamber projecting from the outer contour of the capsule, beyond said extraction area. This makes it easier to be able to move the outlet point of the beverage away from the body of the machine, such that the risk of the beverage coming into contact with the machine as it exits is reduced, and accordingly the working is more hygienic.

In a particularly preferred manner, said closing means are arranged at the end of said inner duct adjacent to said opposite area, at a first distance equal to or greater than 90% of said maximum distance from said inner chamber. Thereby, the time during which the fluid is in contact with the primary product is considerably increased, and the organoleptic properties of the beverage are improved.

When the capsule contains a soluble primary product, such as coffee, cocoa or milk, it is important to achieve a good dissolution with the fluid. To that end, in a particularly preferred embodiment for soluble products, the capsule further comprises a helical surface the inner diameter of which is arranged around the outer perimeter of said inner duct and the outer diameter of which is delimited by side walls forming a helical chamber. As a result of the closed chamber being formed around the helical surface, the primary product and the fluid are forced be mixed together as they move up towards the inner opening.

Another objective considered by the invention is to assure the repeatability of the working of the capsule. To that end, in a preferred embodiment the opening means comprise at least one controlled breaking line provided in said closing means along which said closing means are opened when said compressive force is applied.

An object of another particularly preferred embodiment is to simplify the manufacture of the capsule. To that end, the inner duct and the closing means form a single monolithic part. The main body of the capsule can therefore be manufactured by forming if it is manufactured with a sheet of aluminum, or by thermoforming or injection molding if it is manufactured with plastic.

In another particularly preferred embodiment, the controlled breaking line is a closed curve interrupted by a thickening. The risk of a piece of capsule being able to become detached is thereby completely eliminated since once the closing means are torn along the controlled breaking line, they are held by the thickening.

Another preferred embodiment of the capsule comprises a plurality of controlled breaking lines extending between said inner opening and the upper end of said inner duct. As a result of this arrangement, the exit of primary product through the inner duct is further hindered. Furthermore, this solution also acts like a valve, since when the machine is opened and the compressive force is no longer applied, the closing means tend to close again.

In a particularly preferred manner, the plurality of breaking lines is parallel to the main axis. Alternatively, the lines could be arranged helically.

In certain cases, it may be desirable for the capsule to be able to be opened manually before it is introduced in the machine. To solve this problem, in an alternative embodiment the closing means consist of a sheet that can be punctured and the opening means comprise at least one puncturing member.

As already indicated, the opening a capsule in a reliable and controlled manner is especially relevant in the invention. In a specially preferred embodiment, the closing means is separable from said inner duct along said controlled breaking line and movable within said inner duct to free said inner opening, said capsule further having retaining means for reducing the cross section of said outer opening and for avoiding said closing means to come out of said inner duct when said closing means are separated from said inner duct. Thanks to this, the inner opening is completely free and allows the infusion product to come out of the inner chamber without possible obstructions.

In order to increase the foam produced during the preparation of the infusion beverage with the capsule of the invention, the retaining means is a cover arranged over said outer opening, said cover comprising at least one outlet opening, said outlet opening having a cross section smaller than 2 mm². Due to the cross section reduction compared to the cross-section of the inner duct, the foam production is enhanced. In this case, the cover can be connected to the main body of the capsule by any appropriate means such as gluing, press fit, ultrasound bonding or the like.

In a preferred embodiment seeking to ensure a proper opening of the closing means which is reliable and repeatable with the same results, the closing means comprises a first protrusion protruding outside said first inner duct to the vicinity of said cover and a second protrusion protruding into said first inner duct, said second protrusion being longer than the smallest cross section of said first inner duct at said inner opening. This way the closing means always fall within the inner duct and reduce its cross section. This construction has a further advantage which is to favour the formation of a turbulent flow of the infusion beverage within the inner duct, consequently increasing the foam production in the infusion beverage.

Also, in order to avoid any possible obstruction of the outer opening in cases where few outlet openings are provided, the tip of the second protrusion tapers in the direction of said outer opening. In this way, the closing means will never obstruct the second opening.

Likewise, the invention also has other detail features illustrated in the detailed description of an embodiment of the invention and in the attached drawings.

### Brief Description of the Drawings

Other advantages and features of the invention are apparent from the following description in which preferred embodiments of the invention are described in a nonlimiting manner, making reference to the attached drawings. In the drawings:
Figure 1 shows a longitudinal section view of a first embodiment of a capsule according to the invention, in the closed state and placed inside a machine for preparing infusions.
Figure 2 shows a longitudinal section view of the capsule of Figure 1, in the open state, with the machine closed.
Figure 3 shows a detail view of the closing means of the capsule of Figure 1, in the closed state.
Figure 4 shows a detail view of the closing means of the capsule when they have been opened.
Figure 5 shows a longitudinal section view of a second embodiment of a capsule according to the invention, in the closed state.
Figure 6 shows a detail perspective view of the closing means of the capsule of Figure 5.
Figure 7 shows a detail top plan view of the closing means of the capsule of Figure 5.
Figure 8 shows a detail of the closing means of the capsule of Figure 5 in the closed state, longitudinally sectioned.
Figure 9 shows a detail of the closing means of the capsule of Figure 5 in the open state, longitudinally sectioned.
Figure 10 shows a longitudinal section view of a third embodiment of a capsule according to the invention, in the closed state.
Figure 11 shows a longitudinal section view of the capsule of Figure 10, in the open state.
Figure 12 shows a longitudinal section view of a fourth embodiment of a capsule according to the invention, in the closed state.
Figure 13 shows a longitudinal section view of the capsule of Figure 12, in the open state.
Figure 14 shows a longitudinal section view of a fifth embodiment of a capsule according to the invention, in the closed state.
Figure 15 shows a longitudinal section view of the capsule of Figure 14, in the open state.
Figure 16 shows a longitudinal section view of a sixth embodiment of a capsule according to the invention, in the closed state.
Figure 17 shows a longitudinal section view of the capsule of Figure 16, in the open state.
Figure 18 shows a longitudinal section view of a capsule according to another aspect of the invention, with the capsule in a closed position and placed inside a machine for preparing infusions with the machine open.
Figure 19 shows a detail view of the closing means of the capsule of Figure 18.
Figure 20 shows a longitudinal section view of the capsule of Figure 18, with the capsule in an open position, with the machine closed.

### Detailed Description of Embodiments of the Invention

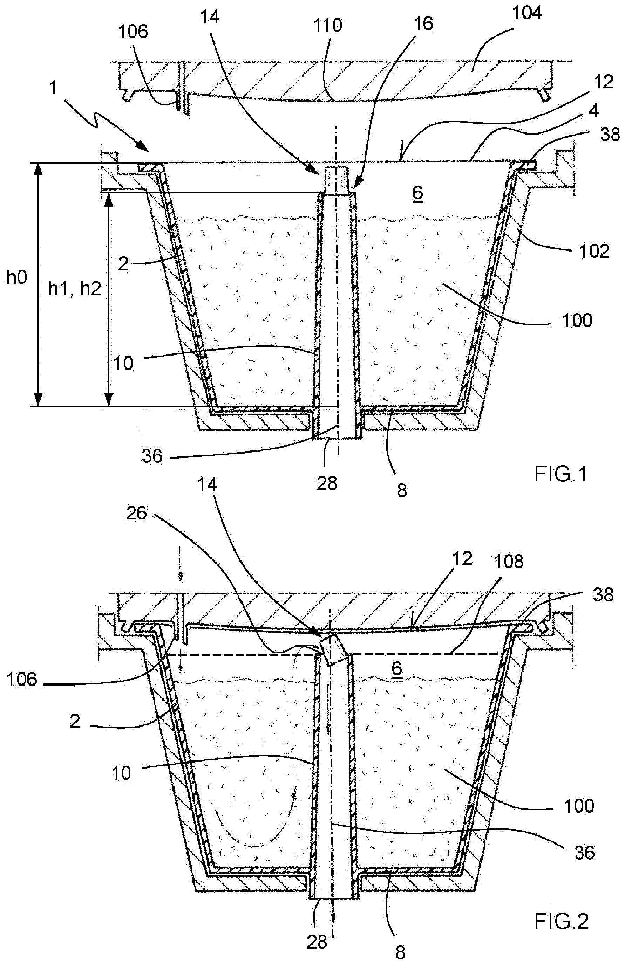

Figures 1 and 2 show a first embodiment of the capsule 1 according to the invention. The capsule 1 is conceived for preparing a beverage product from the interaction between a primary product 100 and a fluid. The fluid is usually water under pressure, and preferably hot water. Nevertheless, it is not ruled out that cold water or other fluids can also be used. The pressurized fluid can be injected under a pressure between 2 and 20 bar and preferably between 4 and 12 bar. The primary product 100 can be ground coffee, tea, "mate" infusion, or alternatively other soluble products such as soluble coffee, cocoa, soup, milk, juices or the like.

The capsule 1 has a main body 2 which preferably has an inverted frustoconical shape. In this embodiment, the main body 2 forms an extraction area 8 at its closed smaller base, whereas it is open at its larger base. To close the capsule 1, there is provided a cover 4, which is preferably a sheet that can be punctured made of materials such as aluminum or plastic. Alternatively, the cover 4 could be a disc made of a material that can be punctured, such as plastic. The main body 2 is manufactured in a substantially rigid material, such as aluminum, or injected or thermoformed plastic. It can also have other geometries, such as a cylindrical geometry, a parallelepipedic geometry or others. The primary product 100 can completely or partially fill the inner chamber 6.

Preferably, the material of the main body 2 and the material of the cover 4 are barrier property materials to prevent primary product degradation. It is also especially preferred that the closing means 14 have barrier properties, in order to provide a hermetic sealing of the inner duct 10. In the invention, a barrier property material refers to a material that does not let oxygen through or that lets it through at very low levels. In a particularly preferred manner, barrier materials according to the invention are those having an oxygen transmission rate (OTR) less than or equal to 0.1 cm³/container/day. In the measurement, the oxygen transmission rate of the container refers to a closed capsule with the cover. As a result, the beverage product is preserved better and for a longer time inside the inner chamber 4. Suitable materials for providing a barrier property are, for example, high density polyethylene (HDPE), aluminum, materials made up of different layers of polymer and metals, cellulose or others. These materials, such as aluminum or polyethylene (PE), prevent oxygen from coming into contact with the primary product 100 before the capsule 1 is opened to start beverage preparation, and therefore prevent oxidation thereof. Removing oxygen from inside the inner chamber 6 is also preferred before closing the capsule 1 to complete packaging. The inner chamber 6 containing the primary product 100 can be filled with a protective atmosphere, such as nitrogen, for example. Then the capsule 1 is close in an air-tight manner, preventing the primary product 100 from being exposed to an atmosphere that could degrade it. Alternatively, if the material is not a barrier material, the capsule 1 could be packed in a wrapper that has a barrier property, duly packaged in the absence of oxygen. For example, a sheet made by laminating a sheet of plastic and a sheet of aluminum could be used.

In the closed inner chamber 6, an inner duct 10 extends at the center of the inner chamber 6, from the extraction area 8, i.e., the side of the capsule from which the product exits, towards an area 12 opposite to the extraction area 8. The inner duct 10 has two ends, one with an inner opening 26 and the other with an outer opening 28. The concept of outer opening 28 refers to the opening of the inner duct 10 through which the beverage product is discharged. Therefore, the outer opening 28 does not necessarily have to project from the main body 2 of the capsule 1. Furthermore, the inner duct 10 defines a main axis 36 in the longitudinal direction of the inner duct 10 itself. The inner duct 10 extends through the inner chamber 6 until virtually reaching the height of the cover 4. The cross-section of the inner duct 10 is preferably circular. Nevertheless, it could have other cross-sections, such as elliptical, square, rectangular, polygonal or others. The inner duct 10 is also preferably a substantially straight cylinder.

As it is apparent from the drawings, in the capsule 1 according to the invention the inner opening 26 is arranged at a first distance h1 which, measured on the main axis 36, is equal to or greater than half the maximum distance h0 from the inner chamber 6 between the extraction area 8 and the opposite area 12 measured on said main axis 36. As already discussed, it is important not to confuse the maximum distance h0 in the invention. In particular, the maximum distance h0 must be measured on the main axis 36 of the inner duct 10 and not at just any point of the inner chamber 6. The maximum distance h0 refers to the distance already described when the capsule 1 is in the closed state. Therefore, the maximum distance h0 is understood to be the longitudinal distance measured on the main axis of the inner duct, from the point farthest away from the inner chamber in the extraction area, to the farthermost point in the area opposite the extraction area. If the capsule 1 has a sheet-like cover 4 that can be punctured, this distance can obviously vary considerably between different capsules, in the order of between 1 and 3 mm. It can be seen in the drawings that the inner chamber 6 contains the primary product 100 approximately defining a primary product level. Nevertheless, as indicated above, this level must be measured after compacting the primary product contained forming a plane perpendicular to the main axis 36. When measured in that way, the primary product level is located below said inner opening 26, which hinders the exit of primary product 100 through the inner opening 26. In a particularly preferred manner, the inner opening 26 is arranged at the end of the inner duct 10 adjacent to the opposite area 12 at a first distance h1 equal to or greater than 90% of said maximum distance h0 from said inner chamber 6.

In this case, the area opposite the extraction area 8 corresponds to the fluid injection area. Nevertheless, it is not essential for the capsule 1 for the injection area and the extraction area 8 to be opposite one another. In a particularly preferred manner, if the beverage product is a soluble product, the entry of liquid in the injection area is off-centered in order to favor mixing up the primary product and it correct dissolution before exiting as a beverage product through the inner duct 10.

At the end of the inner duct 10 in which the inner opening 26 is located, the capsule 1 has closing means 14 for closing the inner duct 10. These closing means 14 are arranged at a second distance h2 greater than the largest dimension of the cross-section of said inner duct 10, which considerably hinders the exit of pieces of capsule through the inner duct 10. The capsule 1 also has opening means 16 at the end of the inner duct 10 corresponding to the inner opening 26. These opening means 16 are arranged for opening up a passage 24 in fluid communication with the outside of the capsule 1 in the closing means 14 when an external compressive force is applied on the opening means 16, for example, before introducing the fluid in said inner chamber 6, but always without using the hydrostatic pressure formed inside the capsule 1.

This external compressive force is usually exerted by the capsule holder of the machine when it is closed before starting the introduction of fluid. Nevertheless, the compressive force being able to be generated by the user manually before introducing the capsule 1 in the machine is not ruled out.

As a result of the arrangement of the closing means 14 in the inner duct 10, separated a second distance h2 away from the outer opening 28 in the direction of the inner chamber 6, it is assured that once the former are punctured by the opening means 16, they do not project through the lower opening 28.

Furthermore, Figures 1 and 2 show that the second distance h2 can be equal to h1, but this does not always have to be the case. As will be seen in other embodiments, the inner opening 26 can be located above the closing means 14, such that the second distance h2 would be less than the first distance h1.

The capsule 1 according to the invention has a closed state in which the inner duct 10 is plugged by means of the closing means 14, and an open state in which the inner chamber 6 can be placed in fluidic communication with the outside of said capsule 1, as a result of the application of the compressive force on the opening means 16, opening up the fluid passage 24 in the closing means 14.

In Figures 1 and 2, the capsule 1 forms a single monolithic part of injected plastic, together with the inner duct 10 and the closing means 14. In the drawings, it can also be seen that the opening means 16, in this case, are a controlled breaking line 18 provided in the transverse wall of plastic configuring the closing means 14.

Furthermore, these closing means 14 comprise a cylindrical lug 22 projecting above the controlled breaking line 18. The lug could have other shapes other than cylindrical, such as parallelepipedic, conical or others. The controlled breaking line 18 weakens the transverse wall, such that when an external compressive force is applied on the cylindrical lug 22, the transverse wall tears. Alternatively, the user can compress the cylindrical lug 22 with a finger in order to open up the fluid passage 24 before introducing the capsule 1 inside the machine.

It is rather unlikely that the cylindrical lug 22 will become detached from the inner duct 10 and reach the mug in which the beverage product is prepared when the capsule 1 is opened. Nevertheless, to avoid this risk, Figures 1 and 2 show that the controlled breaking line 18 of the capsule 1 is a curve, preferably a closed curve, that is interrupted by a thickening 20, preferably a local thickening. This thickening 20 further improves use safety, since the cylindrical lug 22 cannot become detached in any case. Alternatively, instead of the thickening being one spot, it can be along the entire breaking line, with a changing wall thickness along its perimeter.

In the preferred embodiment of Figures 1 a 4, through the extraction area 8, the inner duct 10 extends out of the inner chamber 6 projecting from the main body 2, beyond the extraction area 8. This further prevents the risk of the machine becoming dirty during the working of the capsule and the subsequent cross-contamination between different types of beverages.

The working of the capsule according to the invention is explained in detail below based on the capsule 1 of Figures 1 to 4.

The drawings schematically show a part of the machine for preparing the beverage product. Though not shown in detail, the machine has the elements necessary for preparing hot or cold beverage products. To that end, the machine has a fluid reservoir for containing water or the like, heating means for heating the fluid if necessary, a pump for being able to inject the fluid under pressure into the capsule, and finally a capsule holder made up of a fixed part 102 and a moving part 104.

Initially, the capsule 1, which is in the closed state, is introduced in the fixed part 102 of the capsule holder until the outer opening 28 projects through the lower part of the fixed part 102 and the capsule 1 is supported, for example, on the rim 38.

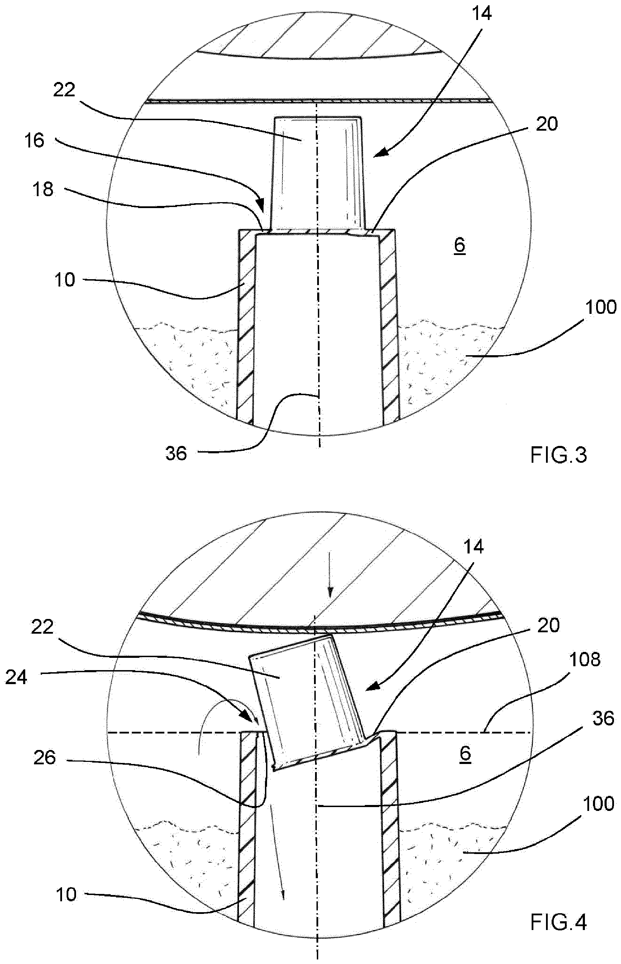

At this point, the moving part 104 of the capsule holder moves the cover 4 to compress the capsule inside the capsule holder, making a downward linear movement. Alternatively, the moving part 104 could make a pivoting movement. It would also be possible for the fixed and moving parts 102, 104 to be interchanged, i.e., for the moving part 104 to be stationary and for the fixed part 102 to be the part that moves up to abut with the moving part 104. First of all, the punch-like injector 106 punctures the cover 4. As downward movement continues, a dishing 110 provided in the moving part 104 is supported on the cover 4 and pushes it downwards, towards the cylindrical lug 22 of the capsule 1. The dishing 110 could be also a rib. When the dishing 110 abuts with the cylindrical lug 22, movement continues and causes the opening means 16 in the form of a controlled breaking line 18 to be torn and the passage 24 to be opened up, which can be seen in Figure 4. Simultaneously, the fluid injector 106 punctures the cover 4. At this time, the injection of fluid still has not started.

When the moving part 104 has reached the end of its travel, the capsule 1 is trapped in a leak-tight manner inside the capsule holder. It is worth commenting that the capsule 1 is depicted in the drawings with certain play inside the capsule holder to make the invention easier to understand, but in practice the capsule 1 would be tightly compressed between the fixed and moving parts 102, 104 of the capsule holder.

Once this final position has been adopted, the injection of fluid into the inner chamber 6 can start, as indicated with the arrows drawn in the injector 106 of Figure 2. In this case, injection takes place in an off-centered manner from above, but it could be carried out from other points of the capsule 1. For example, injection could be from a central upper area or also side area or even lower area.

When entering the inner chamber 6, the fluid mixes with the primary product 100. The primary product 100 could take up the inner chamber 6. Nevertheless, in this case the primary product level 100 is located below the inner opening 26. This hinders non-dissolved primary product 100 from leaking out through the inner duct 10.

For example, if the primary product 100 is a soluble coffee, as hot water under pressure is injected, the inner chamber 6 fills and the water mixes with the soluble coffee. The beverage product, i.e., coffee, will not exit through the passage 24 until the water level reaches the height of the opening 26. This lengthens the product exit time, such that good dissolution of the soluble coffee grains with the water can be achieved.

Once the fluid level surpasses the inner opening 26, the beverage product exits through the passage 24 and the inner duct 10 towards the outer opening 28 towards the mug intended for receiving the prepared beverage product.

When water is no longer injected into the capsule 1 and beverage product preparation has ended, the capsule 1 does not lose liquid because the remainder fluid is flush with the inner opening 26. Therefore, the capsule 1 can be removed from the machine without the risk of air entering the capsule and the remaining fluid exiting through the lower opening 28, watering down the coffee and splashing the user, when the injector 106 is separated from the cover 4.

Other embodiments of the capsule 1 according to the invention are shown below which share most of the features described in the preceding paragraphs. Accordingly, only the elements differentiating the embodiments from one another will be described hereinafter, whereas reference to the description of the first embodiment is made with respect to the elements they have in common.

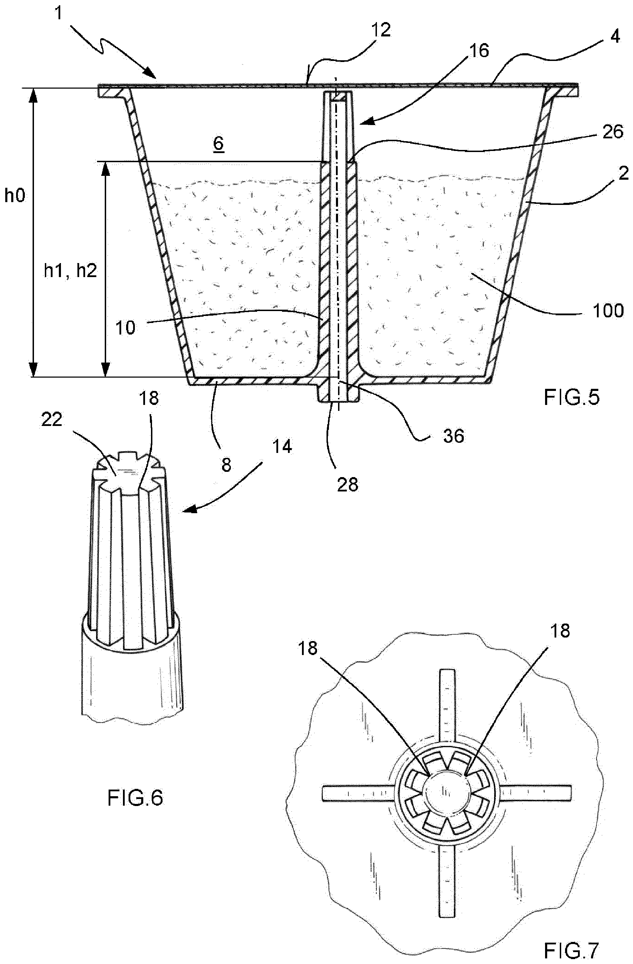

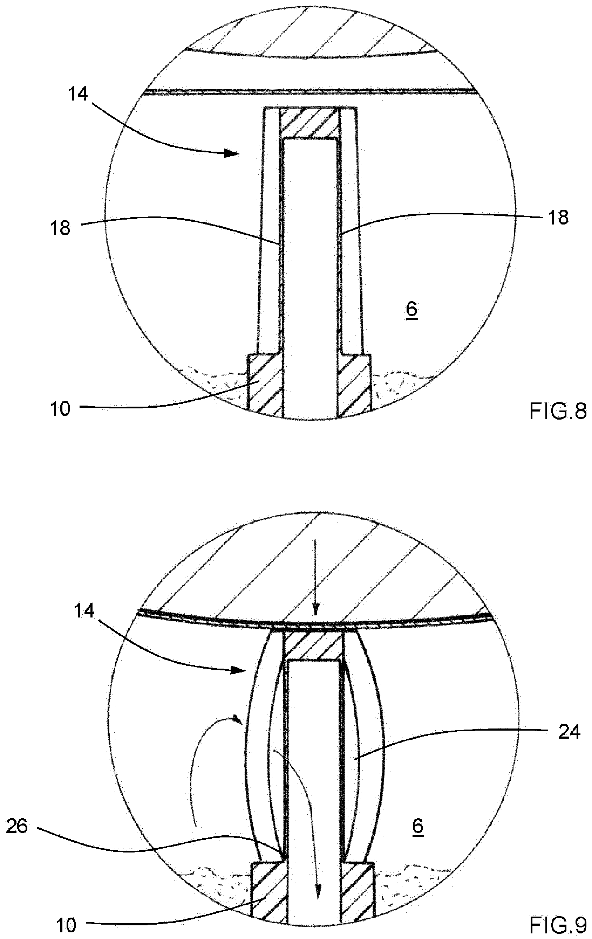

In the embodiment of Figures 5 to 9, the opening means 16 comprise a plurality of controlled breaking lines 18 running between the inner opening 26 and the upper end of the inner duct 10. In this embodiment, the controlled breaking lines 18 are parallel to the main axis 36.

The controlled breaking lines 18 make the closing means 14 behave like a straw. Therefore, when the external compressive force is applied with respect to the capsule 1, the closing means arch, forming a plurality of longitudinal passages 24 making it easier for the prepared beverage product to exit.

In this case, it can be seen that the first distance h1, corresponding to the inner opening 26, is equal to the second height h2 at which the closing means 14 begin.

Another important advantage of this embodiment consists of the fact that due to its configuration, when the external compressive force is no longer applied to the capsule 1, the closing means 14 return to their initial position. Therefore, despite the fact that the controlled breaking lines 18 are open, the passages 24 are virtually closed. Nevertheless, this initial shape recovery is a result of the elasticity itself of the material. Preferably, this type of capsule 1 would be manufactured in an injected plastic material.

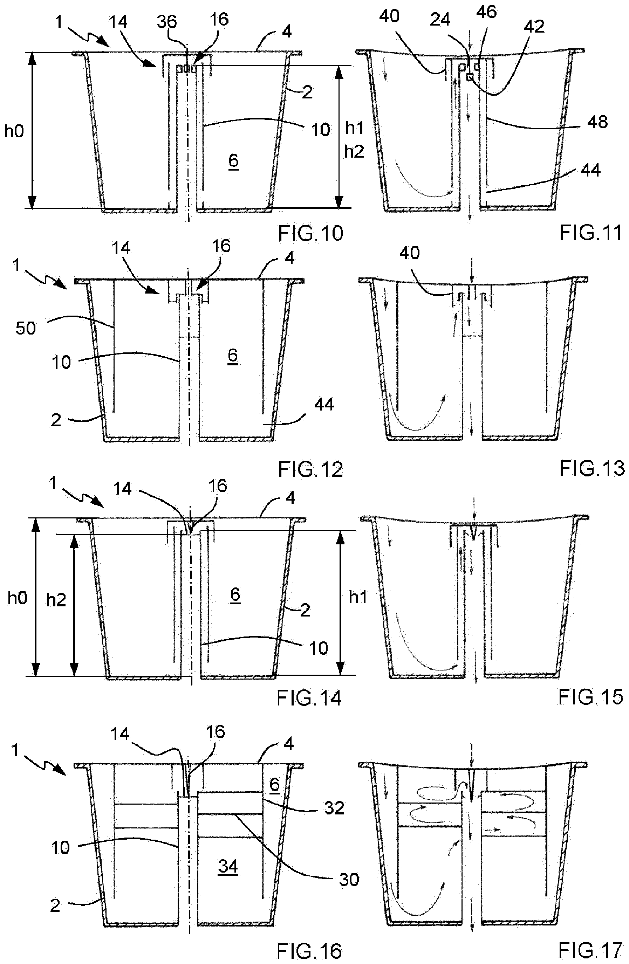

Figures 10 and 11 show another embodiment in which the closing means 14 are obtained by snap fitting. In this case, the opening means 16 are a stopper 40 with a tight segment 42 snapped into a guide 46 provided in the inner duct 10. To make it easier to understand tight segment, it is depicted as being separated from the guide 46, but in reality it is strongly tightened onto it or adhered to it with a food grade material. In this embodiment, when the compressive force is applied, the tight segment 42 disengages from the guide 46 and opens up the passage 24, which allows the exit of the beverage product through the inner duct 10, following the arrows indicated in Figure 11.

This embodiment is particularly conceived for the ground coffee or tea or infusion-type beverages, since once hot water under pressure has been injected, the water is forced to go through all the coffee before being able to exit through the lower passages 44 provided in a concentric duct 48 with respect to the inner duct 10. This path of travel is indicated with the corresponding arrows in the drawings. As a result, the water remains in contact with the ground coffee for a considerable amount of time so that it can better absorb the aroma of the coffee or tea.

The next embodiment in Figures 12 and 13 differs in that it is provided with reduction means 50 for reducing the capacity of the inner chamber 6. These reduction means 50 are, for example, a cylinder which allows the entry of fluid through the lower part through lower passages 44. Again, this forces the fluid to be impregnated with the primary product before it can exit through the inner opening 26. Another important difference in this case consists of the first distance h1 of the inner opening 26 being in this case greater than the second distance h2 of the closing means 14. Another difference consists of the cover 4 being attached to the stopper 40 in order to indicate to the user the position in which the capsule 1 can be opened manually.

The embodiments of Figures 14 to 17 differ in that the closing means 14 consist of a sheet that can be punctured and the opening means 16 comprise at least one puncturing member.

In the embodiment of Figures 16 and 17, a helical surface 30, the inner diameter of which is arranged around the outer perimeter of the inner duct 10 and the outer diameter of which is delimited by side walls 32 forming a helical chamber 34, is furthermore provided. As a result of this configuration, an effect of mixing up the primary product 100 of the inner chamber is achieved. Therefore, this embodiment is very suitable for preparing soluble products.

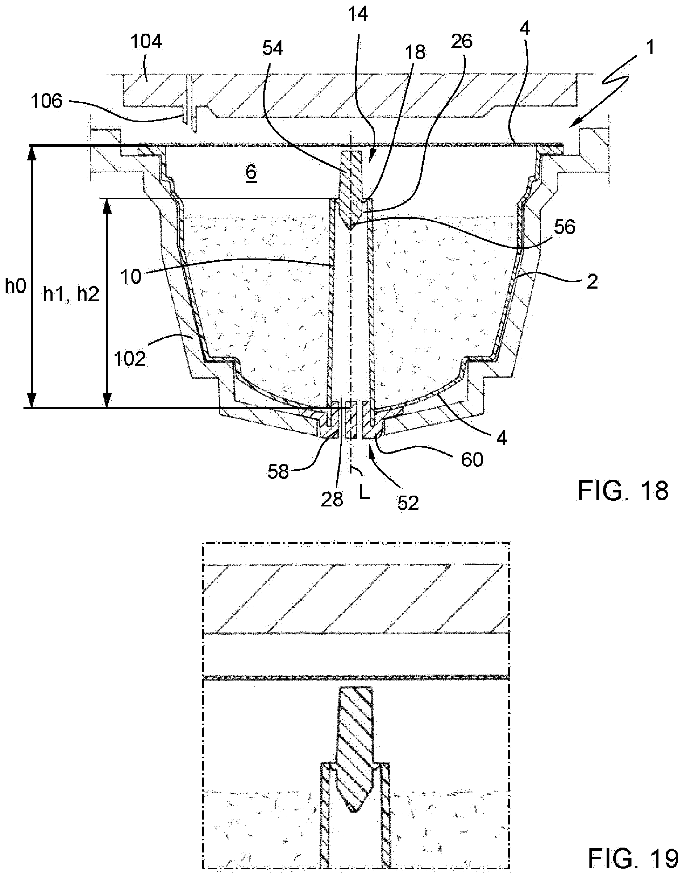

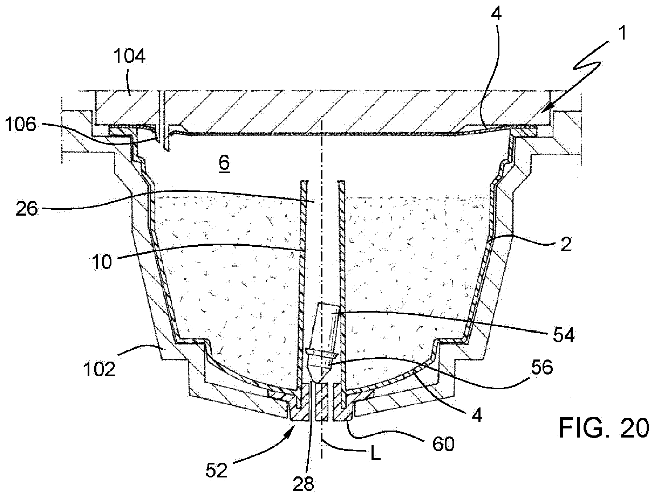

Finally, figures 18 to 20 show a further improvement of the invention.

Again, as in previous embodiments, the closing means 14 are arranged separated from the outer opening 28 in the direction of the inner chamber 6. The separation is the second distance h2 which is greater than the largest dimension of the cross section of the inner duct 10

Differently to the previous embodiments, the closing means 14 is separable from the inner duct 10 along the controlled breaking line. Once separated from the inner duct 10, the closing means 14 can move within the inner duct 10. This leaves the inner opening 26 completely free thus allowing that the infusion beverage comes out easy. Furthermore, in order to avoid that the closing means 14 fall within the infusion beverage which is being prepared, the capsule 1 has retaining means 52 for reducing the cross section of the outer opening 28 and for avoiding the closing means 14 to come out of the inner duct 10.

In this embodiment, the retaining means 52 is a cover 60 arranged over the outer opening 28. Alternatively, the same effect could be obtained by reducing the cross section of the inner duct at the out opening end, such that the closing means 14 are bigger than the cross section of the inner duct 10.

Back to the embodiment, as it is apparent from the figures, the cover 60 comprises six outlet openings 58. In the figures, only the two openings coincident with the cutting plane are shown. These outlet openings 58 have a circular cross section smaller than 2 mm². Other embodiments can have two or three outlet openings 58.

Also, in order to have a reliable and controlled opening of the closing means 14 it is provided that the closing means 14 are formed by a first protrusion 54 protruding outside the first inner duct 10 and extending up to the vicinity of the cover 6. On the other side, the closing means 14 has a second protrusion 56 protruding into the first inner duct 10. Thanks to the fact that the second protrusion 56 is longer than the smallest cross section of the first inner duct 10 at the inner opening 26 it is guaranteed that when the closing means 14 are separated from the inner duct 10, they fall into the inner duct 10.

Also from Figure 19 it is apparent that the tip of the second protrusion 56 tapers in the direction of said outer opening 28 for avoiding accidental obstructions of the outlet openings 58. In particular in this case, the second protrusion 56 is frustroconically shaped, but other tapering forms such a tethraedron, pyramid or others are also possible.

## Claims

1. A capsule (1) for preparing a beverage product from the interaction between a primary product (100) and a fluid comprising
[a] a closed inner chamber (6) having an extraction area (8), and
[b] an inner duct (10) extending longitudinally from said extraction area (8) towards an opposite area (12) to said extraction area (8) and defining a main axis (36), said inner duct (10) comprising an inner opening (26) and an outer opening (28),
[c] said inner opening (26) being arranged at a first distance (h1) which, measured on said main axis (36), from the lowest point (P) delimiting said inner chamber (6) in said extraction area (8), is equal to or greater than half the maximum distance (h0) from said inner chamber (6), said maximum distance (h0) being measured on said main axis (36) from said lowest point (P) delimiting said inner chamber (6), to said opposite area (12), and
said capsule (1) further comprising
[d] closing means (14) for closing said inner duct (10) and
[e] opening means (16) arranged for opening up a passage (24) of fluid communication with the outside of said capsule (1) in said closing means (14) when an external compressive force with respect to the capsule (1) is applied on said opening means (16),
**characterized in that**
[f] said closing means (14) are arranged separated from said outer opening (28) in the direction of said inner chamber (6) at a second distance (h2) that is at least greater than the largest dimension of the cross section of said inner duct (10).

2. The capsule (1) according to claim 1, **characterized in that** said closing means (14) are arranged such that said second distance (h2) is equal to said first distance (h1).

3. The capsule (1) according to claim 1 or 2, **characterized in that** said inner chamber (6) contains a primary product (100) defining a primary product level, and **in that** said primary product level (100) is located below said inner opening (26).

4. The capsule (1) according to any one of claims 1 to 3, **characterized in that** said inner opening (26) is arranged at the end of said inner duct (10) adjacent to said opposite area (12), said first distance (h1) being equal to or greater than 90% of said maximum distance (h0) from said inner chamber (6).

5. The capsule (1) according to any one of claims 1 to 4, **characterized in that** through the extraction area (8), said inner duct (10) extends out of the inner chamber (6) projecting from the outer contour of the capsule, beyond said extraction area (8).

6. The capsule (1) according to any one of claims 1 to 5, **characterized in that** it further comprises a helical surface (30) the inner diameter of which is arranged around the outer perimeter of said inner duct (10) and the outer diameter of which is delimited by side walls (32) forming a helical chamber (34).

7. The capsule (1) according to any one of claims 1 to 6, **characterized in that** said opening means (16) comprise at least one controlled breaking line (18) provided in said closing means (14) along which said closing means (14) are opened when said compressive force is applied.

8. The capsule (1) according to claim 7, **characterized in that** said inner duct (10) and said closing means (14) form a single monolithic part.

9. The capsule (1) according to claim 7 or 8, **characterized in that** said controlled breaking line (18) is a curve interrupted by a thickening (20).

10. The capsule (1) according to any one of claims 7 to 9, **characterized in that** said opening means (16) comprise a plurality of controlled breaking lines (18) extending between said inner opening (26) and the upper end of said inner duct (10).

11. The capsule (1) according to claim 10, **characterized in that** said plurality of breaking lines (18) are parallel to said main axis (36).

12. The capsule (1) according to any one of claims 1 to 6, **characterized in that** said closing means (14) consisting of a sheet that can be punctured and said opening means (16) comprise at least one puncturing member.

13. The capsule (1) according to claims 7 to 8, **characterized in that** said closing means (14) is separable from said inner duct (10) along said controlled breaking line (18) and movable within said inner duct (10) to free said inner opening (26), said capsule further having retaining means (52) for reducing the cross section of said outer opening (28) and for avoiding said closing means (14) to come out of said inner duct (10) when said closing means (14) are separated from said inner duct (10).

14. The capsule (1) according to claim 13, **characterized in that** said retaining means (52) is a cover (60) arranged over said outer opening (28), said cover (60) comprising at least one outlet opening (58), said outlet opening (58) having a cross section smaller than 2 mm².

15. The capsule (1) according to claim 13 or 14, **characterized in that** said closing means (14) comprises a first protrusion (54) protruding outside said first inner duct (10) to the vicinity of said cover (6) and a second protrusion (56) protruding into said first inner duct (10), said second protrusion (56) being longer than the smallest cross section of said first inner duct (10) at said inner opening (26).

16. The capsule (1) according to claim 15, **characterized in that** the tip of said second protrusion (56) tapers in the direction of said outer opening (28).

## Patentansprüche

1. Eine Kapsel (1) zur Herstellung eines Getränkeprodukts durch Zusammenwirken eines Primärprodukts (100) und eines Fluids, umfassend
[a] eine geschlossene innere Kammer (6) mit einem Extraktionsbereich (8), und
[b] einen inneren Kanal (10), der sich in Längsrichtung vom Extraktionsbereich (8) in Richtung eines dem Extraktionsbereich (8) gegenüberliegenden Bereich (12) erstreckt und eine Hauptachse (36) definiert, wobei der innere Kanal (10) eine innere Öffnung (26) und eine äußere Öffnung (28) umfasst,
[c] wobei die innere Öffnung (26) in einem ersten Abstand (h1), gemessen entlang der Hauptachse (36), vom niedrigsten Punkt (P) angeordnet ist, welcher die innere Kammer (6) im Extraktionsbereich (8) begrenzt, und welcher gleich oder größer als die Hälfte des maximalen Abstands (h0) von der inneren Kammer (6) ist, wobei der maximale Abstand (h0) auf der Hauptachse (36) von dem niedrigsten Punkt (P), welcher die innere Kammer (6) begrenzt, zu dem gegenüberliegenden Bereich (12) gemessen wird, und
wobei die Kapsel (1) weiter umfasst:
[d] Verschlussmittel (14) zum Schließen des inneren Kanals (10), und
[e] Öffnungsmittel (16), angeordnet, um einen Durchgang (24) zur Fluidverbindung mit der Außenseite der Kapsel (1) in den Verschlussmitteln (14) zu öffnen, wenn eine äußere Druckkraft in Bezug auf die Kapsel (1) auf die Öffnungsmittel (16) ausgeübt wird,
**dadurch gekennzeichnet, dass**
[f] die Verschlussmittel (14) von der äußeren Öffnung (28) getrennt in Richtung der inneren Kammer (6) in einem zweiten Abstand (h2) angeordnet sind, der mindestens größer ist als die größte Abmessung des Querschnitts des inneren Kanals (10).

2. Kapsel (1) nach Anspruch 1, **dadurch gekennzeichnet, dass** die Verschlussmittel (14) so angeordnet sind, dass der zweite Abstand (h2) gleich dem ersten Abstand (h1) ist.

3. Kapsel (1) nach Anspruch 1 oder 2, **dadurch gekennzeichnet, dass** die innere Kammer (6) ein Primärprodukt (100) enthält, welches ein Primärproduktniveau definiert, und dass sich das Primärproduktniveau (100) unterhalb der inneren Öffnung (26) befindet.

4. Kapsel (1) nach einem der Ansprüche 1 bis 3, **dadurch gekennzeichnet, dass** die innere Öffnung (26) am Ende des inneren Kanals (10) angrenzend an den gegenüberliegenden Bereich (12) angeordnet ist, wobei der erste Abstand (h1) gleich oder größer als 90% des maximalen Abstands (h0) von der inneren Kammer (6) ist.

5. Kapsel (1) nach einem der Ansprüche 1 bis 4, **dadurch gekennzeichnet, dass** sich der innere Kanal (10) aus der inneren Kammer (6) von der Außenkontur der Kapsel vorspringend durch den Extraktionsbereich (8) über den Extraktionsbereich (8) hinaus erstreckt.

6. Kapsel (1) nach einem der Ansprüche 1 bis 5, **dadurch gekennzeichnet, dass** diese weiter eine schraubenförmige Fläche (30) umfasst, deren Innendurchmesser um den Außenumfang des inneren Kanals (10) herum angeordnet ist und deren Außendurchmesser durch Seitenwände (32) begrenzt ist, die eine schraubenförmige Kammer (34) bilden.

7. Kapsel (1) nach einem der Ansprüche 1 bis 6, **dadurch gekennzeichnet, dass** die Öffnungsmittel (16) mindestens eine in den Verschlussmitteln (14) ausgeführte Sollbruchlinie (18) umfassen, entlang welcher die Verschlussmittel (14) geöffnet werden, wenn die Druckkraft aufgebracht wird.

8. Kapsel (1) nach Anspruch 7, **dadurch gekennzeichnet, dass** der innere Kanal (10) und die Verschlussmittel (14) einstückig ausgeführt sind.

9. Kapsel (1) nach Anspruch 7 oder 8, **dadurch gekennzeichnet, dass** die Sollbruchlinie (18) eine Kurve ist, die durch eine Verdickung (20) unterbrochen wird.

10. Kapsel (1) nach einem der Ansprüche 7 bis 9, **dadurch gekennzeichnet, dass** die Öffnungsmittel (16) eine Vielzahl von Sollbruchlinien (18) umfassen, die sich zwischen der inneren Öffnung (26) und dem oberen Ende des inneren Kanals (10) erstrecken.

11. Kapsel (1) nach Anspruch 10, **dadurch gekennzeichnet, dass** die Vielzahl von Sollbruchlinien (18) parallel zur Hauptachse (36) verlaufen.

12. Kapsel (1) nach einem der Ansprüche 1 bis 6, **dadurch gekennzeichnet, dass** die Verschlussmittel (14) aus einer durchstechbaren Folie ausgeführt sind und dass die Öffnungsmittel (16) mindestens ein Durchstechelement umfassen.

13. Kapsel (1) nach einem der Ansprüche 7 bis 8, **dadurch gekennzeichnet, dass** die Verschlussmittel (14) von dem inneren Kanal (10) entlang der Sollbruchlinie (18) trennbar und innerhalb des inneren Kanals (10) bewegbar ist, um die innere Öffnung (26) freizugeben, wobei die Kapsel weiterhin Rückhaltemittel (52) umfasst, um den Querschnitt der äußeren Öffnung (28) zu verringern und um zu verhindern, dass die Verschlussmittel (14) aus dem inneren Kanal (10) heraustreten, wenn die Verschlussmittel (14) von dem inneren Kanal (10) getrennt werden.

14. Kapsel (1) nach Anspruch 13, **dadurch gekennzeichnet, dass** die Rückhaltemittel (52) eine Abdeckung (60) sind, die über der äußeren Öffnung (28) angeordnet ist, wobei die Abdeckung (60) mindestens eine Auslassöffnung (58) umfasst, wobei die Auslassöffnung (58) einen Querschnitt kleiner als 2 mm² hat.

15. Kapsel (1) nach Anspruch 13 oder 14, **dadurch gekennzeichnet, dass** die Verschlussmittel (14) einen ersten Vorsprung (54), der aus dem ersten inneren Kanal (10) in die Nähe des Deckels (6) ragt, und einen zweiten Vorsprung (56), der in den ersten inneren Kanal (10) hineinragt, umfassen, wobei der zweite Vorsprung (56) länger ist als der kleinste Querschnitt des ersten inneren Kanals (10) an der inneren Öffnung (26).

16. Kapsel (1) nach Anspruch 15, **dadurch gekennzeichnet, dass** sich die Spitze des zweiten Vorsprungs (56) in Richtung der äußeren Öffnung (26) verjüngt.

## Revendications

1. Capsule (1) pour préparer un produit de boisson à partir de l'interaction entre un produit primaire (100) et un fluide, comprenant :
[a] une chambre interne fermée (6) ayant une zone d'extraction (8), et
[b] un conduit interne (10) s'étendant longitudinalement depuis ladite zone d'extraction (8) vers une zone opposée (12) à ladite zone d'extraction (8) et définissant un axe principal (36), ledit conduit interne (10) comprenant une ouverture interne (26) et une ouverture externe (28),
[c] ladite ouverture interne (26) étant agencée à une première distance (h1) qui, mesurée sur ledit axe principal (36) depuis le point le plus bas (P) délimitant ladite chambre interne (6) de ladite zone d'extraction (8), est égale ou supérieure à la moitié de la distance maximum (h0) depuis ladite chambre interne (6), ladite distance maximum (h0) étant mesurée sur ledit axe principal (36) depuis ledit point le plus bas (P) délimitant ladite chambre interne (6) jusqu'à ladite zone opposée (12), et
ladite capsule (1) comprenant en outre :
[d] des moyens de fermeture (14) pour fermer ledit conduit interne (10), et
[e] des moyens d'ouverture (16) agencés pour ouvrir un passage (24) de communication fluidique avec l'extérieur de ladite capsule (1) dans lesdits moyens de fermeture (14) lorsqu'une force de compression externe par rapport à la capsule (1) est appliquée sur lesdits moyens d'ouverture (16),
**caractérisée en ce que**
[f] lesdits moyens de fermeture (14) sont agencés séparés de ladite ouverture externe (28) dans la direction de ladite chambre interne (6) à une seconde distance (h2) qui est au moins supérieure à la dimension la plus grande de la section transversale dudit conduit interne (10).

2. Capsule (1) selon la revendication 1, **caractérisée en ce que** lesdits moyens de fermeture (14) sont agencés de telle sorte que ladite seconde distance (h2) est égale à ladite première distance (h1).

3. Capsule (1) selon la revendication 1 ou 2, **caractérisée en ce que** ladite chambre interne (6) contient un produit primaire (100) définissant un niveau de produit primaire, et **en ce que** ledit niveau de produit primaire (100) est situé en dessous de ladite ouverture interne (26).

4. Capsule (1) selon l'une quelconque des revendications 1 à 3, **caractérisée en ce que** ladite ouverture interne (26) est agencée à l'extrémité dudit conduit interne (10) adjacente à ladite zone opposée (12), ladite première distance (h1) étant égale ou supérieure à 90 % de ladite distance maximum (h0) depuis ladite chambre interne (6).

5. Capsule (1) selon l'une quelconque des revendications 1 à 4, **caractérisée en ce qu'**à travers la zone d'extraction (8), ledit conduit interne (10) s'étend à l'extérieur de la chambre interne (6) en faisant saillie depuis le contour extérieur de la capsule, au-delà de ladite zone d'extraction (8).

6. Capsule (1) selon l'une quelconque des revendications 1 à 5, **caractérisée en ce qu'**elle comprend en outre une surface hélicoïdale (30) dont le diamètre interne est agencé autour du périmètre externe dudit conduit interne (10) et dont le diamètre externe est délimité par des parois latérales (32) formant une chambre hélicoïdale (34).

7. Capsule (1) selon l'une quelconque des revendications 1 à 6, **caractérisée en ce que** lesdits moyens d'ouverture (16) comprennent au moins une ligne de rupture commandée (18) prévue dans lesdits moyens de fermeture (14) le long de laquelle lesdits moyens de fermeture (14) sont ouverts lorsque ladite force de compression est appliquée.

8. Capsule (1) selon la revendication 7, **caractérisée en ce que** ledit conduit interne (10) et lesdits moyens de fermeture (14) forment une pièce monolithique unique.

9. Capsule (1) selon la revendication 7 ou 8, **caractérisée en ce que** ladite ligne de rupture commandée (18) est une courbe interrompue par un épaississement (20).

10. Capsule (1) selon l'une quelconque des revendications 7 à 9, **caractérisée en ce que** lesdits moyens d'ouverture (16) comprennent une pluralité de lignes de rupture commandées (18) s'étendant entre ladite ouverture interne (26) et l'extrémité supérieure dudit conduit interne (10).

11. Capsule (1) selon la revendication 10, **caractérisée en ce que** lesdites lignes de rupture (18) sont parallèles audit axe principal (36).

12. Capsule (1) selon l'une quelconque des revendications 1 à 6, **caractérisée en ce que** lesdits moyens de fermeture (14) sont constitués d'une feuille qui peut être perforée et lesdits moyens d'ouverture (16) comprennent au moins un élément de perforation.

13. Capsule (1) selon les revendications 7 à 8, **caractérisée en ce que** lesdits moyens de fermeture (14) peuvent être séparés dudit conduit interne (10) le long de ladite ligne de rupture commandée (18) et peuvent être déplacés à l'intérieur dudit conduit interne (10) pour libérer ladite ouverture interne (26), ladite capsule ayant en outre des moyens de retenue (52) pour réduire la section transversale de ladite ouverture externe (28) et pour éviter que lesdits moyens de fermeture (14) ne sortent dudit conduit interne (10) lorsque lesdits moyens de fermeture (14) sont séparés dudit conduit interne (10).

14. Capsule (1) selon la revendication 13, **caractérisée en ce que** lesdits moyens de retenue (52) sont un couvercle (60) agencé sur ladite ouverture externe (28), ledit couvercle (60) comprenant au moins une ouverture de sortie (58), ladite ouverture de sortie (58) ayant une section transversale inférieure à 2 mm².

15. Capsule (1) selon la revendication 13 ou 14, **caractérisée en ce que** lesdits moyens de fermeture (14) comprennent une première saillie (54) faisant saillie à l'extérieur dudit premier conduit interne (10) au voisinage dudit couvercle (6) et une seconde saillie (56) faisant saillie jusque dans ledit premier conduit interne (10), ladite seconde saillie (56) étant plus longue que la section transversale la plus petite dudit premier conduit interne (10) au niveau de ladite ouverture interne (26).

16. Capsule (1) selon la revendication 15, **caractérisée en ce que** la pointe de ladite seconde saillie (56) est effilée dans la direction de ladite ouverture externe (28).
